# EUROPÄISCHE PATENTSCHRIFT

(11) **EP 3 515 732 B1**
(45) Veröffentlichungstag und Bekanntmachung des Hinweises auf die Patenterteilung: **29.01.2020**
(21) Anmeldenummer: 17772663.5
(22) Anmeldetag: 19.09.2017
(51) Int. Cl.: B60G 11/27, B60G 11/30

(54) **LUFTFEDERSYSTEM, FAHRZEUG MIT LUFTFEDERSYSTEM UND VERFAHREN ZUR MONTAGE EINES LUFTFEDERSYSTEMS**
AIR SPRING SYSTEM, VEHICLE HAVING AN AIR SPRING SYSTEM, AND METHOD FOR MOUNTING AN AIR SPRING SYSTEM
SYSTÈME DE RESSORT PNEUMATIQUE, VÉHICULE ÉQUIPÉ D'UN SYSTÈME DE RESSORT PNEUMATIQUE ET PROCÉDÉ DE MONTAGE D'UN SYSTÈME DE RESSORT PNEUMATIQUE

(30) Priorität: 21.09.2016 DE 102016117769
(43) Veröffentlichungstag der Anmeldung: 31.07.2019
(73) Patentinhaber: SAF-HOLLAND GmbH, 63856 Bessenbach (DE)
(72) Erfinder: FÄTH, Stefan, 63743 Aschaffenburg (DE); WALLMEIER, Stefan, 63773 Goldbach (DE); DEHLWES, Stephan, 22844 Norderstedt (DE)
(74) Vertreter: Müller Schupfner & Partner Patent- und Rechtsanwaltspartnerschaft mbB
(86) Internationale Anmeldenummer: PCT/EP2017/073631
(87) Internationale Veröffentlichungsnummer: WO 2018/054900

(56) Entgegenhaltungen:
- WO-A1-2012/087917
- WO-A1-2012/145451
- DE-A1-102014 008 121
- US-A- 3 655 214
- US-A- 4 858 949
- US-B1- 6 250 613

## Beschreibung

Die vorliegende Erfindung betrifft ein Luftfedersystem, ein Fahrzeug mit einem Luftfedersystem und ein Verfahren zur Montage eines Luftfedersystems.

Luftfedern sind aus dem Stand der Technik hinlänglich bekannt. Typischerweise werden sie zur Abfederung einer Fahrzeugachse oder zur Veränderung einer Niveaulage eines Fahrzeugs verwendet. Wesentliche Bestandteile der Luftfeder sind ein Kolben und ein Luftbalg, wobei der Luftbalg und der Kolben relativ zueinander verschiebbar sind. Dabei rollt der Luftbalg bei einer Ein- und Ausfederung an einer Außenfläche des Kolbens ab. Hierzu ist der Luftbalg vorzugsweise aus einem elastischen Material gefertigt, mit dem eine Faltbewegung während des Abrollens bewirkt werden kann. Eine Dämpfung wird zudem dadurch hervorgerufen, dass ein Fluid, insbesondere Luft, zwischen einem durch den Luftbalg und den Kolben breitgestellten Arbeitsraum und einer in dem Kolben ausgebildeten Kammer über einen verengten Querschnitt hin - und herströmt. Aufgrund des verengten Querschnitts und der damit verbundenen Reibung werden die eingeleiteten Schwingungen gedämpft.

Das Dämpfungsverhalten einer solchen Luftfeder ist abhängig vom zur Verfügung stehenden Luftvolumen. Zur Erhöhung des Volumens ist es daher bekannt, den Arbeitsraum mit einem Zusatzvolumen in Form eines separaten Zusatzreservoirs zu verbinden. Aus dem Stand der Technik ist - beispielsweise aus der Druckschrift DE 10 2004 011 466 A1 - eine Luftfeder bekannt, deren Kolben über einen Verbindungskanal mit einem Zusatzvolumenbehälter verbunden ist. Allerdings nimmt das Zusatzvolumen hierbei zusätzlichen Bauraum ein und muss entsprechend aufwendig montiert werden.

Die WO 2012/145451 A1 zeigt eine Luftfederung für ein Aufhängungssystem für ein Fahrzeug mit einer variablen Federrate.

Die WO 2012/087917 A1 offenbart eine Kolbenanordnung, umfassend ein integrales Kolbenreservoir mit einem vergrößernden Volumen, wobei der Kolben an einem Strukturelement festgelegt werden kann, so dass das Kolbenreservoir zumindest zwei Seiten des Strukturelements umgibt.

Die US 6,250,613 B1 offenbart ein Abstandselement für eine Luftfederanordnung, welche einen im Wesentlichen zylindrischen Körper aufweist.

Die DE 10 2014 008 121 A1 betrifft einen Federlenker mit einem Lufttank für eine Luftfeder, umfassend einen radseitigen und einen aufbauseitigen Anbindungsabschnitt sowie einen zwischen den beiden Anbindungsabschnitten angeordneten Tragabschnitt, welcher die Luftfeder trägt.

Die US 3,655,214 A betrifft ein gezogenes Fahrzeug umfassend zwei radtragende Einheiten, welche voneinander beabstandet sind.

Die US 4,858,949 A offenbart eine leichtgewichtige Längslenkeraufhängung umfassend eine Rahmenhalterungsanordnung, einen Längslenker und eine Luftfederanordnung ausgebildet durch einen fixierten Becher mit einem bewegbaren Kolben.

Es ist daher eine Aufgabe der vorliegenden Erfindung ein Luftfedersystem bereitzustellen, das gegenüber den Luftfedersystemen aus dem Stand der Technik in Hinblick auf seine Montage und Kompaktheit verbessert ist.

Diese Aufgabe wird gelöst durch ein Luftfedersystem gemäß Anspruch 1, ein Fahrzeug gemäß Anspruch 13 sowie ein Verfahren zur Montage eines Luftfedersystems gemäß Anspruch 14. Weitere Vorteile und Merkmale der Erfindung ergeben sich aus den Unteransprüchen sowie der Beschreibung und den beigefügten Figuren.

Erfindungsgemäß ist ein Luftfedersystem für eine Fahrzeugachse vorgesehen, umfassend ein schwenkbar an einem Fahrzeugrahmen anordenbares Lenkerelement zur Lagerung der Fahrzeugachse, eine an dem Lenkerelement anordenbare Luftfeder, insbesondere eine zur Luftdämpfung vorgesehene Luftfeder, mit einem Kolben, und ein Zusatzreservoir, wobei das Lenkerelement eine dem Fahrzeugrahmen zugewandte Oberseite und eine dem Fahrzeugrahmen abgewandte Unterseite aufweist. Dabei ist es vorgesehen, dass das Zusatzreservoir an der Unterseite des Lenkerelements montierbar ist und die Luftfeder an der Oberseite des Lenkerelements montierbar ist. Gegenüber dem Stand der Technik ist es erfindungsgemäß vorgesehen, die Luftfeder und das Zusatzreservoir an gegenüberliegenden Seiten, nämlich an der Oberseite und an der Unterseite, am Lenkerelement zu montieren. Dies erweist sich insofern als vorteilhaft, als dass es nicht länger erforderlich ist, bei einem Austausch der Luftfeder oder des Zusatzreservoirs die gesamte Einheit von Luftfeder und Zusatzreservoir zu demontieren. Insbesondere betrifft das einen Austausch eines Luftbalgs der Luftfeder, der im Vergleich zum Zusatzreservoir wegen seiner Dauerbelastung beim Ein- und Ausfedern eine im Durchschnitt geringere Lebensdauer aufweist. Vorzugsweise sind die Luftfeder und das Zusatzreservoir hierbei als separate Bauteile ausgestaltet, die jeweils an an der Oberseite bzw. der Unterseite des Lenkerelements vorgesehenen Schnittstellenbereichen am Lenkerelement montiert sind. Entsprechend lassen sich das Zusatzreservoir und die Luftfeder jeweils als kompakte Einheiten zum Befestigen, insbesondere Anschrauben, an das Lenkerelement ausbilden. Die Schnittstellenbereiche sind beispielsweise derart mit Aussparung und/oder Wölbungen - beispielsweise unter Bildung einer Mulde - ausgestaltet, dass sich das Zusatzreservoir bzw. die Luftfeder an dem Lenkerelement vorpositionieren lässt. Insbesondere ist es vorgesehen, dass die Luftfeder über den Kolben an dem Lenkerelement befestigt ist. Weiterhin ist es bevorzugt vorgesehen, dass die Luftfeder an der Oberseite und das Zusatzreservoir an der Unterseite des Lenkerelements jeweils zumindest teilweise, vorzugsweise überwiegend flächig anliegen. Ein weiterer Vorteil der Montage der Luftfeder und des Zusatzreservoirs an gegenüberliegenden Seiten ist, dass allein die Luftfeder für die zu erwartenden Belastungen beim Abfedern bzw. Dämpfen ausgelegt werden muss, während das an der Unterseite des Lenkerelements befestigte Zusatzreservoir beim Abfedern bzw. Dämpfen im Wesentlichen belastungsfrei bleibt. Entsprechend ist es möglich, das Zusatzreservoir beispielweise in Hinblick auf eine Materialbeschaffenheit weitgehend frei auszugestalten. Z. B. lässt sich das Zusatzreservoir aus einem Kunststoff ausbilden. Insbesondere ist ein Luftfedersystem vorgesehen, bei dem das Lenkerelement schwenkbar an dem Fahrzeugrahmen angelenkt ist, wobei an der Oberseite des Lenkerelements der Kolben einer Luftfeder montiert ist und an der Unterseite des Lenkerelements das Zusatzreservoir montiert ist. Zudem ist die Luftfeder mit einer Seite am Fahrzeugrahmen und mit einer anderen Seite am Lenkerelement befestigt. Weiterhin ist es vorzugsweise vorgesehen, dass die Oberseite und die Unterseite Teil einer gemeinsamen Wandung des Lenkerelements, die vorzugweise eine Dicke zwischen 0.5 cm und 4 cm aufweist, sind. Neben dem Kolben umfasst die Luftfeder insbesondere den Luftbalg. Dieser Luftbalg weist vorzugsweise einen elastisch deformierbaren zylinderförmigen Mantel auf, der einerseits an den Kolben, z. B. über einen Klemmring, und anderseits an den Fahrzeugrahmen gebunden ist. Bei einer Abfederbewegung wird ein von dem Kolben und dem Luftbalg eingeschlossenes Arbeitsvolumen, in dem ein Fluid, insbesondere Luft, gesammelt ist, verringert. Durch einen Querschnitt im Kolben kann ferner die Luft aus dem Arbeitsvolumen treten, wodurch sich ein Dämpfungseffekt für die Luftfeder und damit für eine Schwenkbewegung des Lenkerelements mit der gelagerten Fahrzeugachse erzielen lässt.

Gemäß einer weiteren Ausführungsform der vorliegenden Erfindung ist es vorgesehen, dass das Zusatzreservoir und die Luftfeder über ein Befestigungsmittel, vorzugsweise über ein gemeinsames Befestigungsmittel, an das Lenkerelement angebunden sind. Die Nutzung eines gemeinsamen Befestigungsmittels erweist sich insofern als vorteilhaft, als dass so die Gesamtzahl an zur Montage des Luftfedersystems erforderlichen Bauteilen möglichst gering gehalten werden kann. Zudem bedarf es nur eines einzelnen Befestigungsschritts bzw. Arbeitsschritts, mit dem zugleich Luftfeder und Zusatzreservoir mit dem Lenkerelement verbunden werden können. Hierzu verbindet das gemeinsame Befestigungsmittel vorzugsweise einen an der Oberseite anliegenden Teil der Luftfeder mit einem an der Unterseite anliegenden Teil des Zusatzreservoirs. Als Befestigungsmittel ist vorzugsweise eine Schraube vorgesehen.
Zur Vereinfachung der Montage des Zusatzreservoirs an das Lenkerelement ist es insbesondere vorgesehen, dass das Befestigungsmittel durch das Zusatzreservoir und/oder das Lenkerelement durchgreift. Dadurch lässt sich auf einfache und unkomplizierte Weise das Zusatzreservoir und/oder die Luftfeder von unten, d. h. von einer dem Fahrzeugrahmen abgewandten Unterseite des Zusatzreservoirs kommend, mit dem Befestigungsmittel am Lenkerelement anbringen bzw. montieren. Hierzu ist es insbesondere vorgesehen, dass das Befestigungsmittel länger ist als der durchzugreifende Bereich im Zusatzreservoir. Vorstellbar ist es auch, dass eine Wandung des Zusatzreservoirs in dem Bereich, in dem das Befestigungsmittel eingesetzt wird, einen rückspringen Konturverlauf aufweist. Beispielsweise bildet die Wandung hier eine Senke, um einen Schraubenkopf zu versenken, damit das Befestigungsmittel nicht hervorsteht, sondern im Wesentlich bündig mit der Wandung außerhalb des Senkenbereichs, insbesondere auf einer dem Fahrzeugrahmen abgewandten Seite, abschließt.

Vorzugsweise ist es vorgesehen, dass sich ein Schnittstellenbereich an der Oberseite, an dem die Luftfeder montiert ist, und ein Schnittstellenbereich an der Unterseite, an dem das Zusatzreservoir montiert ist, des Lenkerelements bzw. am Lenkerelement einander gegenüberliegen. Insbesondere sind die Luftfeder und das Zusatzreservoir derart angeordnet, dass eine Wandung des Lenkerelements eine Trennwand zwischen der Luftfeder auf der einen Seite und dem Zusatzreservoir auf der anderen Seite bildet. Dadurch wird der Abstand zwischen dem Zusatzreservoir und dem Luftsystem möglichst gering gehalten, so dass kein komplexes Leitungssystem erforderlich ist, mit dem andernfalls eine fluide Kopplung zwischen dem Zusatzreservoir und der Luftfeder realisiert werden müsste. Vorzugsweise ist es vorgesehen, dass das Zusatzreservoir und die Luftfeder in den Schnittstellenbereichen über ein Befestigungsmittel, insbesondere über das gemeinsame Befestigungsmittel, mit dem Lenkerelement verbunden sind.

Hierbei ist es vorteilhafterweise vorgesehen, dass im montierten Zustand das Zusatzreservoir und die Luftfeder in einer senkrecht zur Oberseite und/oder senkrecht zur Unterseite des Längsträgers verlaufenden Richtung zumindest teilweise übereinanderliegen. Diese Anordnung erlaubt es in vorteilhafter Weise, das Zusatzreservoir und die Luftfeder im selben Bereich am Lenkerelement anzubinden, wodurch eine kompakte Anordnung und eine entsprechend vereinfachte Montage wegen ihrer räumliche Nähe möglich sind.

In einer weiteren Ausführungsform der vorliegenden Erfindung ist vorgesehen, dass die Luftfeder und das Zusatzreservoir für einen Gasaustausch über einen durch das Lenkerelement durchgreifenden Kanal miteinander verbunden sind. Durch den Kanal ist eine fluide Kopplung zwischen dem Zusatzreservoir und der Luftfeder möglich. Durch den durch das Lenkerelement verlaufenden Kanal erspart man sich vorteilhaft ein an der Außenseite des Lenkerelements entlanglaufendes Leitungssystem, das von der Oberseite des Lenkerelements zur Unterseite des Lenkerelements führt.

Vorzugsweise ist ein Ventil zur Steuerung des Gasaustauschs vorgesehen. Über das Ventil lässt sich in vorteilhafter Weise eine Dämpfungscharakteristik an unterschiedliche Fahrsituationen anpassen. Vorstellbar ist dabei, dass das Ventil in das Lenkerelement bzw. in den Kanal eingelassen ist.

Bevorzugterweise ist es vorgesehen, dass das Zusatzreservoir und die Luftfeder in einem in Längsrichtung gesehenen Endbereich bzw. Abschlussbereich des Lenkerelements (einem sogenannten Tail-End) angeordnet sind. Dadurch wird nicht nur eine möglichst große Hebelarmlänge des am schwenkbar gelagerten Lenkerelements realisiert, sondern wegen des Abstands zur Fahrzeugachse ist dieser Bereich auch für die Montage oder zum Austauschen einzelner Teile vergleichsweise leicht zugänglich.

Zweckmäßig ist es vorgesehen, dass die Luftfeder sich in Längsrichtung gesehen über eine erste Länge erstreckt und das Zusatzreservoir in Längsrichtung gesehen über eine zweite Länge erstreckt, wobei die zweite Länge größer ist als die erste Länge. Dabei bemisst sich die erste Länge insbesondere als Durchmesser der Luftfeder bzw. des Kolbens. Vorzugsweise nimmt das Verhältnis zwischen der ersten Länge zu der zweiten Länge einen Wert zwischen 0,6 und 0,9, bevorzugt zwischen 0,66 und 0,83 und besonders bevorzugt zwischen 0,72 und 0,75 an.

Weiterhin ist es vorstellbar, dass sich das Zusatzreservoir über eine senkrecht zur Längsrichtung und eine senkrecht zur Unterseite verlaufende Richtung über eine Höhe erstreckt, wobei die erste Länge größer ist als die Höhe des Zusatzreservoirs. Vorzugsweise ist es vorgesehen, dass das Verhältnis der Höhe zur zweiten Länge einen Wert zwischen 0,3 und 0,8, vorzugsweise 0,4 und 0,6 und besonders bevorzugt zwischen 0,43 und 0,53 annimmt.

Weiterhin ist es vorgesehen, dass das Zusatzreservoir in Längsrichtung gesehen verjüngt, insbesondere in Hinblick auf seine Höhe. Vorzugsweise umfasst das Zusatzreservoir in Längsrichtung gesehen ein erstes Ende und ein zweites Ende, wobei das erste Zusatzreservoir am ersten Ende dicker ist als am zweiten Ende. Vorzugsweise ist das erste Ende der Aufnahme für die Fahrzeugachse zugewandt.

Gemäß einer weiteren Ausführungsform der vorliegenden Erfindung ist es vorgesehen, dass das Befestigungsmittel mehrteilig ist. Beispielsweise lässt sich ein erster Teil des Befestigungsmittels durch das Zusatzreservoir durchstecken und das andere Teil wird von der gegenüberliegenden Seite kommend mit dem ersten Teil des Befestigungsmittels verbunden, um das Zusatzreservoir mit dem Lenkerelement zu verbinden.

In einer weiteren Ausführungsform der vorliegenden Erfindung ist vorgesehen, dass das Lenkerelement Seitenwände aufweist, wobei das Zusatzreservoir zumindest teilweise, vorzugsweise überwiegend, passgenau oder formschlüssig in einen von der Unterseite des Lenkerelements und den Seitenwänden aufgespannten Hohlbereich einsetzbar ist. Insbesondere stehen die Seitenwände von der die Oberseite und die Unterseite aufweisenden Wandung des Lenkerelements ab, insbesondere senkrecht ab. Durch das Einsetzen des Zusatzreservoirs in diesen Hohlbereich wird insbesondere ein besonders kompaktes Luftfedersystem realisiert. Zum Einsetzen weist der Hohlbereich eine offene Seite auf, über die das Zusatzreservoir in den Hohlbereich bei der Montage eingeführt wird. Die Seitenwände stabilisieren nicht nur vorteilhaft das Lenkerelement, sie umfassen vorzugsweise die Aufnahme zur Lagerung der Fahrzeugachse. Darüber hinaus schützen die Seitenwände das Zusatzreservoir, wenn das Zusatzreservoir zwischen ihnen platziert ist.

Weiterhin ist es vorstellbar, dass das Zusatzreservoir derart ausgestaltet ist, dass im montierten Zustand ein Zwischenraum zwischen der Seitenwand und dem Zusatzreservoir ausgebildet. Dieser Zwischenraum verhindert, dass das Zusatzreservoir mit dem Lenkerelement verklemmt und dass ein einfacher Zugriff auf das Zusatzreservoir möglich ist. Dies vereinfacht die Entnahme des Zusatzreservoirs. Vorzugsweise nimmt ein Verhältnis einer in Querrichtung bemessenen Spaltbreite zwischen dem Zusatzreservoir und der Seitenwand und einer in Querrichtung bemessenen Breite des Zusatzreservoirs einen Wert zwischen 0,1 und 0,25, bevorzugt zwischen 0,075 und 0,125 und besonders bevorzugt zwischen 0,083 und 0,094 an.

In einer weiteren oder ergänzenden Ausführungsform der vorliegenden Erfindung ist es vorgesehen, dass eine zur Lagerung der Fahrzeugachse vorgesehene Aufnahme eine Begrenzung für den Hohlbereich bildet, wobei das Zusatzreservoir an einer Seite an die durch die Aufnahme vorgegebene Begrenzung vorzugsweise formangepasst ist. Dadurch lässt sich der Hohlbereich möglichst vollständig für das Zusatzreservoir nutzen. Vorzugsweise ist die Seite des Zusatzreservoirs hierbei gebogen ausgestaltet.

In einer weiteren Ausführungsform der vorliegenden Erfindung ist vorgesehen, dass das Zusatzreservoir derart ausgestaltet ist, dass es in einer senkrecht zur Unterseite des Lenkerelements verlaufenden Richtung gesehen gegenüber den Seitenwänden vorsteht. Dadurch wird der Zugriff auf das Zusatzreservoirs vereinfacht, da ein direktes Kontaktieren des gegenüber den Seitenwänden vorspringenden Bereichs des Zusatzreservoirs möglich ist und anschließend das Zusatzreservoir aus dem Hohlbereich nur rausgezogen werden kann.

Gemäß der vorliegenden Erfindung ist vorgesehen, dass das Zusatzreservoir über einen reversibel lösbaren Kuppelmechanismus austauschbar an der Unterseite des Lenkerelements festgelegt bzw. montiert ist. Insbesondere lässt sich das Zusatzreservoir austauschen, wenn es die zu erwartenden Fahrsituationen erfordert. Gleichzeitig ist es auch vorstellbar, dass ein kleineres Zusatzreservoir eingesetzt wird, wenn absehbar ist, dass dieses für die zu erwartenden Situationen ausreicht.

Vorzugsweise ist das Zusatzreservoir über am Lenkerelement befestigte Riemen am Lenkerelement montiert. Insbesondere sind mehrere in Längsrichtung verteilte Riemen vorgesehen. Mittels der Riemen lässt sich die Stabilität der Verbindung zwischen dem Zusatzreservoir und dem Lenkerelement in vorteilhafter Weise weiter erhöhen. Insbesondere sorgen die Riemen für eine Anbindung an das Lenkerelement in einem Bereich, der beabstandet ist zum Schnittstellenbereich, in dem das Zusatzreservoir mit dem Lenkelement über das Befestigungsmittel befestigt sind.

In einer weiteren Ausführungsform der vorliegenden Erfindung ist es vorgesehen, dass der Kopplungsmechanismus zusätzlich zur Befestigung durch das Befestigungsmittel vorgesehen ist. Dadurch lässt sich mittels des Kopplungsmechanismus das Zusatzreservoir am Lenkerelement vorfixieren, um es anschließend mit dem Befestigungsmittel final zu fixieren.

Die Lösung der Aufgabe gelingt ebenfalls mit einem Fahrzeug mit einem Luftfedersystem gemäß den vorhergehenden Ausführungen. Sämtliche für das Luftfedersystem beschriebenen Merkmale und deren Vorteile lassen sich sinngemäß ebenfalls auf das erfindungsgemäße Fahrzeug übertragen und andersrum.

Die Lösung der Aufgabe gelingt ebenfalls mit einem Verfahren zu Montage eines Luftfedersystems gemäß den vorhergehenden Ausführungen, umfassend die Verfahrensschritte:
-- Anordnen eines Zusatzreservoirs an einer Unterseite eines Längslenkers
-- Anordnen einer Luftfeder an einer Oberseite des Lenkerelements und
-- Befestigen des Zusatzreservoirs an der Unterseite des Lenkerelements und der Luftfeder an der Oberseite des Lenkerelements. Sämtliche für das erfindungsgemäße Luftfedersystem beschriebenen Merkmale und deren Vorteile lassen sich sinngemäß ebenfalls auf das erfindungsgemäße Verfahren übertragen und andersrum.

Gemäß einer weiteren Ausführungsform der vorliegenden Erfindung ist vorgesehen, dass die Luftfeder zeitlich nach dem Anordnen des Zusatzreservoirs an der Unterseite an der Oberseite angeordnet wird. Hierbei ist es bevorzugt vorgesehen, dass zeitlich nach dem Anordnen der Zusatzreservoirs am Lenkerelemente die Luftfeder auf die Oberseite des Lenkerelements aufgesetzt wird. Anschließend erfolgt, beispielsweise durch eine Verschraubung, das Verbinden der Luftfeder und des Zusatzreservoirs mit dem Lenkerelement.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden
Es zeigt:
- **Fig.1a und 1b:**: schematische Darstellungen eines Luftfedersystems gemäß einer ersten bevorzugten Ausführungsform der vorliegenden Erfindung in einer perspektivischen Ansicht (1a) und einer Schnittansicht (1b)
- **Fig. 2:**: eine Detailansicht eines Luftfedersystems gemäß einer zweiten bevorzugten Ausführungsform der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

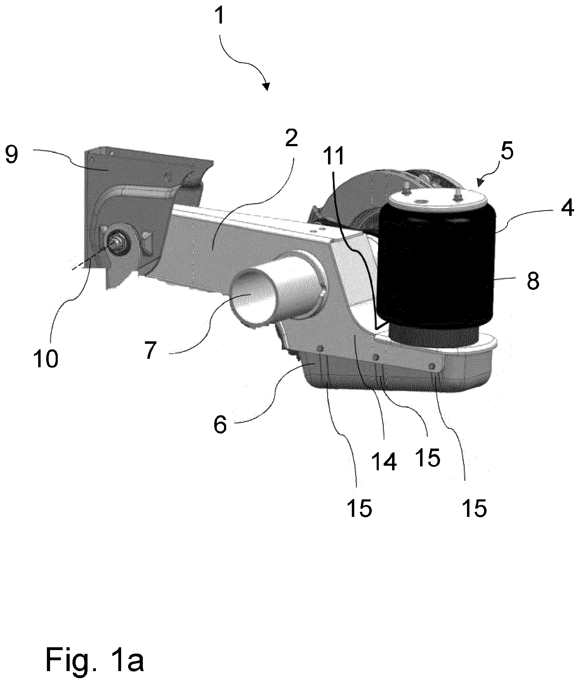

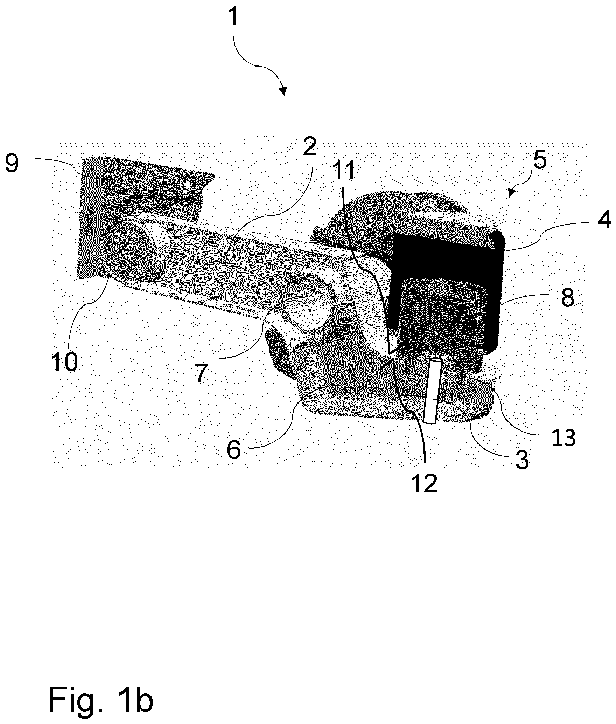

In den **Figur 1a** **und** **1b** ist schematisch in einer perspektivischen Ansicht (1a) und in einer Schnittansicht (1b) ein Luftfedersystem 1 gemäß einer ersten bevorzugten Ausführungsform der vorliegenden Erfindung dargestellt. Insbesondere handelt es sich um ein Luftfedersystem 1, das für eine Fahrzeugachse vorgesehen ist. Hierbei ist die Fahrzeugachse in einem Lenkerelement 2, vorzugsweise an einem in Längsrichtung des Fahrzeugs verlaufenden Lenkerelement 2, gelagert, wobei das Lenkerelement 2 wiederum an einem ersten Ende schwenkbar um eine Schwenkachse 10 an einem Fahrzeugrahmen 9 angelenkt ist. An einem dem ersten Ende in Längsrichtung gesehenen gegenüberliegenden zweiten Ende ist die Luftfeder 5 angeordnet. Vorzugsweise ist zwischen dem ersten Ende und dem zweiten Ende, insbesondere in einer dem zweiten Ende zugewandten Hälfte des Längsträgers 2, eine Aufnahme 7 im Lenkerelement 2 vorgesehen, durch die die Fahrzeugachse im montierten Zustand durchgreift bzw. in der die Fahrzeugachse drehbar gelagert ist. Um eine abfedernde Wirkung auf die Schwenkbewegung des Lenkerelements 2 und somit auf die im Lenkerelement gelagerte Fahrzeugachse zu verursachen, verbindet die Luftfeder 5 das Lenkerelement 2 mit dem Fahrzeugrahmen 9 (hier nicht dargestellt). Insbesondere verbindet die Luftfeder 5 das Lenkerelement 2 mit einem Bereich am Fahrzeugrahmen 9, der in vertikaler Richtung gesehen im Wesentlichen oberhalb der Anbindung der Luftfeder 5 am Lenkerelement 2, d. h. oberhalb des zweiten Ende des Lenkerelement 2, angeordnet ist. Wesentliche Bestandteile der Luftfeder 5 sind ein Kolben 8 und ein Luftbalg 4, wobei der Luftbalg 4 und der Kolben 8 relativ zueinander, insbesondere entlang einer vertikalen Richtung, verschiebbar sind. Dabei umfasst der Luftbalg 4 einen zylinderförmigen Mantel, der aus einem elastischen Material gefertigt ist und beim Zusammenschieben von Luftbalg 4 und Kolben 8 eine Faltbewegung vollzieht. Hierbei ist der zylinderförmige Mantel an einem Ende, beispielsweise über einen Klemmring, mit einer Außenseite des Kolbens 8 verbunden, während das andere Ende des Luftbalgs 4 mit einer Unterseite des Fahrzeugrahmens 9 verbunden ist. Eine Dämpfwirkung wird dabei durch ein Fluid, wie z. B. Luft, im Arbeitsraum zwischen Kolben 8 und Luftbalg 4 erzeugt. Weiterhin ist es vorgesehen, dass der Kolben 8 unmittelbar an einer dem Fahrzeugrahmen 9 zugewandte Oberseite des Lenkerelements 2 montiert ist. Zudem ist ein Zusatzreservoir 6 vorgesehen, mit dem eine Füllmenge des Fluids im Arbeitsraum zwischen dem Kolben 8 und dem Luftbalg 4 steuerbar ist bzw. in den Luft aus dem Arbeitsraum eingeleitet werden kann. Erfindungsgemäß ist es hierbei vorgesehen, dass das Zusatzreservoir 6 an einer dem Fahrzeugrahmen 9 abgewandten Unterseite 12 des Lenkerelements 2 angeordnet ist. Durch diese Anordnung ist es vorteilhaft möglich, das Zusatzreservoir 6 und die Luftfeder 5 separat auszutauschen, ohne dass das gesamte System aus Zusatzreservoir 6 und Luftfeder 5 demontiert werden muss. Insbesondere erweist es sich als vorteilhaft, dass die Luftfeder 5, insbesondere der Luftbalg 4, mit seiner im Durchschnitt geringeren Lebensdauer aus dem Luftfedersystem 1 entnommen werden kann, ohne dass das Zusatzreservoir 6 entfernt werden muss. Um einen Fluidaustausch zwischen der Luftfeder 5 und dem Zusatzreservoir 6 zu gewährleisten, ist ein Kanal 13 insbesondere ein durch das Lenkerelement 2 durchgreifender Kanal 13 vorgesehen. Vorzugsweise umfasst dieser Kanal 13 ein Ventil, mit dem der Fluidaustausch zwischen dem Zusatzreservoir 6 und der Luftfeder 5 kontrolliert bzw. gesteuert werden kann. Für eine möglichst kurze Strecke, die zwischen dem Zusatzreservoir 6 und der Luftfeder 5 zum Fluidaustausch überbrückt werden muss, ist das Zusatzreservoir 6 insbesondere unterhalb der Luftfeder 5 an die Unterseite 12 des Lenkerelements 2 montiert. Bevorzugt bildet das Lenkerelement 2 eine Trennwand zwischen der Luftfeder 5 und dem Zusatzreservoir 6. Dadurch kann auf eine zusätzliche Zuleitung in vorteilhafter Weise verzichtet werden. Weiterhin ist es vorgesehen, dass das Zusatzreservoir 6 innerhalb eines zur einen Seite hin offenen Hohlbereichs, der von im Wesentlichen vertikal verlaufenden Seitenwänden 14 und der Unterseite 12 gebildet ist, angeordnet ist. Dadurch wird das Zusatzreservoir 6 durch die Seitenwänden 14 geschützt. Zudem stellen die Seitenwände 14 die Aufnahme für die Fahrzeugachse bereit und stabilisieren das Lenkerelement 2. Weiterhin ist das Zusatzreservoir 6 vorzugsweise derart ausgeformt, dass es sich passgenau in den Hohlbereich einfügen lässt. Beispielsweise wird der Hohlbereich an einer seiner Seiten durch eine Aufnahme für die Fahrzeugachse begrenzt und das Zusatzreservoir 6 ist an der Seite entsprechend, beispielsweise durch einen entsprechend komplementär gebogenen Verlauf, ausgeformt. Für einen einfachen Zugriff auf das Zusatzreservoir 6 ist das Zusatzreservoir 6 derart ausgestaltet, dass es gegenüber den Seitenwänden 14 vorsteht. Weiterhin ist ein Riemen 15 vorgesehen, der an den Seitenwänden 14 des Lenkerelements 2 montierbar ist, und der derart um eine von dem Fahrzeugrahmen 9 abgewandten Unterseite des Zusatzreservoirs 6 herum verläuft, dass das Zusatzreservoir 6 vom Riemen 15 von unten gestützt wird. Vorzugsweise dienen mehrere in Längsrichtung hintereinander angeordnete Riemen 15 als Montagehilfe bzw. zusätzliche stabilisierende Befestigung, während ein durch das Zusatzreservoir 6 durchgreifendes Befestigungsmittel 3, beispielsweise eine zur Mittenverschraubung dienende Schraube, das Zusatzreservoir 6 an das Lenkerelement 2 anbindet. Vorzugsweise ist das Befestigungsmittel 3 in einem Bereich angeordnet, in dem in einer senkrecht zur Oberseite des Lenkerelements 2 verlaufenden Richtung das Zusatzreservoir 6 und die Luftfeder 5 übereinanderliegen.

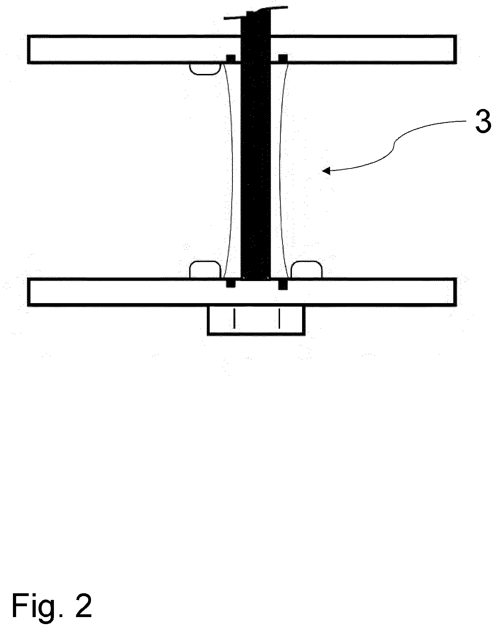

In Figur 2 ist eine Detailansicht eines Luftfedersystems 1 gemäß einer zweiten bevorzugten Ausführungsform der vorliegenden Erfindung dargestellt. Hierbei handelt es sich um eine Detaildarstellung des Befestigungsmittels 3, mit dem das Zusatzreservoir 6 an das Lenkerelement 2 befestigt ist. Vorzugsweise weist das Lenkerelement 2 eine Aussparung auf, durch die das Befestigungsmittel 3 hindurchgreift und zur Anbindung des Kolbens 8 der Luftfeder 5 genutzt wird. Mit anderen Worten: mit einem durch das Lenkerelement 2 durchgreifendes gemeinsamen Befestigungsmittel 3 lassen sich sowohl das Zusatzreservoir 6 als auch die Luftfeder 5 am Lenkerelement 2 befestigen. Vorzugsweise wird hierbei erst das Zusatzreservoir 6 an das Lenkerelement 2 und anschließend die Luftfeder 5 angelegt. Schließlich erfolgt das dauerhafte Anbinden durch das Befestigungsmittel 3, insbesondere durch ein Stahl aufweisendes Befestigungsmittel 3.

### Bezugszeichenliste

- 1: Luftfedersystem
- 2: Lenkerelement
- 3: Befestigungsmittel
- 4: Luftbalg
- 5: Luftfeder
- 6: Zusatzreservoir
- 7: Aufnahme
- 8: Kolben
- 9: Fahrzeugrahmen
- 10: Schwenkachse
- 11: Oberseite
- 12: Unterseite
- 13: Kanal
- 14: Seitenwand
- 15: Riemen

## Patentansprüche

1. Luftfedersystem (1) für eine Fahrzeugachse, umfassend ein schwenkbar an einem Fahrzeugrahmen anordenbares Lenkerelement (2) zur Lagerung der Fahrzeugachse,
eine an dem Lenkerelement (2) anordenbare Luftfeder (5) mit einem Kolben (8), und
ein Zusatzreservoir (6),
wobei das Lenkerelement (2) eine dem Fahrzeugrahmen zugewandte Oberseite (11) und eine dem Fahrzeugrahmen abgewandte Unterseite (12) aufweist,
wobei das Zusatzreservoir (6) an der Unterseite (12) des Lenkerelements (2) montierbar ist und die Luftfeder (5) an der Oberseite (11) des Lenkerelements (2) montierbar ist,
**dadurch gekennzeichnet, dass** das Zusatzreservoir (6) über einen reversibel lösbaren Kuppelmechanismus austauschbar an der Unterseite (12) des Lenkerelements (2) montiert ist.

2. Luftfedersystem (1) gemäß Anspruch 1, wobei das Zusatzreservoir (6) und die Luftfeder (5) über ein Befestigungsmittel (3), vorzugsweise über ein gemeinsames Befestigungsmittel (3), an das Lenkerelement (2) angebunden sind.

3. Luftfeder (1) gemäß Anspruch 2, wobei das Befestigungsmittel (3) durch das Zusatzreservoir (6) und/oder das Lenkerelement (2) durchgreift.

4. Luftfedersystem (1) gemäß einem der vorhergehenden Ansprüche, wobei sich ein Schnittstellenbereich an der Oberseite (11), an dem die Luftfeder (5) montiert ist, und ein Schnittstellenbereich an der Unterseite (12), an dem das Zusatzreservoir (6) montiert ist, am Lenkerelement (2) einander gegenüberliegen.

5. Luftfedersystem (1) gemäß einem der vorhergehenden Ansprüche, wobei im montierten Zustand das Zusatzreservoir (6) und die Luftfeder (5) in einer senkrecht zur Oberseite (11) und/oder senkrecht zur Unterseite (12) des Lenkerelements (2) verlaufende Richtung zumindest teilweise übereinanderliegen.

6. Luftfedersystem (1) gemäß einem der vorhergehenden Ansprüche, wobei die Luftfeder (5) und das Zusatzreservoir (6) für einen Gasaustausch über einen durch das Lenkerelement (2) durchgreifenden Kanal (14) miteinander verbunden sind.

7. Luftfedersystem (1) gemäß Anspruch 6, wobei ein Ventil zur Steuerung des Gasaustauschs vorgesehen ist.

8. Luftfedersystem (1) gemäß einem der vorhergehenden Ansprüche, wobei das Zusatzreservoir (6) und die Luftfeder (5) in einem in Längsrichtung gesehenen Endbereich des Lenkerelements (2) angeordnet sind.

9. Luftfedersystem (1) gemäß einem der vorhergehenden Ansprüche, wobei das Lenkerelement (2) Seitenwände (14) aufweist, wobei das Zusatzreservoir (6) zumindest teilweise, vorzugsweise überwiegend, formschlüssig in einen von der Unterseite (12) des Lenkerelements (2) und den Seitenwänden (14) aufgespannten Hohlbereich einsetzbar ist.

10. Luftfedersystem (1) gemäß Anspruch 9, wobei eine zur Lagerung der Fahrzeugachse vorgesehene Aufnahme (7) eine Begrenzung für den Hohlbereich bildet, wobei das Zusatzreservoir (6) an einer Seite an die durch die Aufnahme (7) vorgegebene Begrenzung formangepasst ist.

11. Luftfedersystem (1) gemäß einem der vorhergehenden Ansprüche, wobei das Zusatzreservoir (6) derart ausgestaltet ist, dass es in einer senkrecht zur Unterseite (12) des Lenkerelements (2) verlaufenden Richtung gesehen gegenüber den Seitenwänden (14) vorsteht.

12. Luftfedersystem (1) gemäß einem der vorhergehenden Ansprüche, wobei das Zusatzreservoir (6) über am Lenkerelement (2) befestigte Riemen am Lenkerelement (2) montiert ist.

13. Fahrzeug, insbesondere Nutzfahrzeug oder Anhänger für ein Nutzfahrzeug, mit einem Luftfedersystem (1) gemäß einem der vorhergehenden Ansprüche.

14. Verfahren zur Montage eines Luftfedersystems (1) gemäß einem der vorhergehenden Ansprüche an einem Fahrzeug, umfassend die Verfahrensschritte:
-- Anordnen eines Zusatzreservoirs (6) an einer Unterseite eines Lenkerelements (2)
-- Anordnen einer Luftfeder (5) an einer Oberseite (11) des Lenkerelements (2) und
-- Befestigen des Zusatzreservoirs (6) an der Unterseite (12) des Lenkerelements (2) über einen reversibel lösbaren Kuppelmechanismus und der Luftfeder (5) an der Oberseite des Lenkerelements (2).

## Claims

1. An air spring system (1) for a vehicle axle, comprising
a link element (2) which can be pivotably arranged on a vehicle frame for mounting the vehicle axle,
an air spring (5) which can be arranged on the link element (2) and has a piston (8), and
an additional reservoir (6),
the link element (2) having an upper side (11) which faces the vehicle frame and a lower side (12) which faces away from the vehicle frame,
it being possible for the additional reservoir (6) to be mounted on the lower side (12) of the link element (2), and it being possible for the air spring (5) to be mounted on the upper side (11) of the link element (2), **characterized in that**
the additional reservoir (6) being mounted exchangeably on the lower side (12) of the link element (2) via a reversibly releasable coupling mechanism.

2. The air spring system (1) as claimed in claim 1, the additional reservoir (6) and the air spring (5) being attached to the link element (2) via a fastening means (3), preferably via a common fastening means (3).

3. The air spring (1) as claimed in claim 2, the fastening means (3) engaging through the additional reservoir (6) and/or the link element (2).

4. The air spring system (1) as claimed in one of the preceding claims, an interface region on the upper side (11), on which the air spring (5) is mounted, and an interface region on the lower side (12), on which the additional reservoir (6) is mounted, lying opposite one another on the link element (2).

5. The air spring system (1) as claimed in one of the preceding claims, the additional reservoir (6) and the air spring (5) lying at least partially above one another, in the mounted state, in a direction which runs perpendicularly with respect to the upper side (11) and/or perpendicularly with respect to the lower side (12) of the link element (2).

6. The air spring system (1) as claimed in one of the preceding claims, the air spring (5) and the additional reservoir (6) being connected to one another for a gas exchange via a channel (14) which reaches through the link element (2).

7. The air spring system (1) as claimed in claim 6, a valve for controlling the gas exchange being provided.

8. The air spring system (1) as claimed in one of the preceding claims, the additional reservoir (6) and the air spring (5) being arranged in an end region as viewed in the longitudinal direction of the link element (2).

9. The air spring system (1) as claimed in one of the preceding claims, the link element (2) having side walls (14), it being possible for the additional reservoir (6) to be inserted at least partially, preferably predominantly, in a positively locking manner into a hollow region which is defined by the lower side (12) of the link element (2) and the side walls (14).

10. The air spring system (1) as claimed in claim 9, a seat (7) which is provided for mounting the vehicle axle forming a boundary for the hollow region, the shape of the additional reservoir (6) being adapted on one side to the boundary which is predefined by way of the seat (7).

11. The air spring system (1) as claimed in one of the preceding claims, the additional reservoir (6) being configured in such a way that it projects with respect to the side walls (14) as viewed in a direction which runs perpendicularly with respect to the lower side (12) of the link element (2).

12. The air spring system (1) as claimed in one of the preceding claims, the additional reservoir (6) being mounted on the link element (2) via belts which are fastened to the link element (2).

13. A vehicle, in particular a commercial vehicle or a trailer for a commercial vehicle, having an air spring system (1) as claimed in one of the preceding claims.

14. A method for mounting an air spring system (1) as claimed in one of the preceding claims on a vehicle, comprising the method steps:
-- arranging of an additional reservoir (6) on a lower side of a link element (2),
-- arranging of an air spring (5) on an upper side (11) of the link element (2), and
-- fastening of the additional reservoir (6) to the lower side (12) of the link element (2) via a reversibly releasable coupling mechanism, and fastening of the air spring (5) to the upper side of the link element (2).

## Revendications

1. Système à ressort pneumatique (1) pour un essieu de véhicule, comportant
un élément formant bras oscillant (2) susceptible d'être agencé de façon mobile en pivotement sur un châssis de véhicule pour monter l'essieu du véhicule,
un ressort pneumatique (5) susceptible d'être agencé sur l'élément formant bras oscillant (2) et pourvu d'un piston (8), et
un réservoir supplémentaire (6),
dans lequel
l'élément formant bras oscillant (2) présente une face supérieure (11) tournée vers le châssis de véhicule et une face inférieure (12) détournée du châssis de véhicule,
le réservoir supplémentaire (6) peut être monté sur la face inférieure (12) de l'élément formant bras oscillant (2) et le ressort pneumatique (5) peut être monté sur la face supérieure (11) de l'élément formant bras oscillant (2),
**caractérisé en ce que**
le réservoir supplémentaire (6) est monté sur la face inférieure (12) de l'élément formant bras oscillant de façon interchangeable via un mécanisme de couplage détachable réversible.

2. Système à ressort pneumatique (1) selon la revendication 1,
dans lequel
le réservoir supplémentaire (6) et le ressort pneumatique (5) sont attachés à l'élément formant bras oscillant par un moyen de fixation (3), de préférence par un moyen de fixation commun (3).

3. Système à ressort pneumatique (1) selon la revendication 2,
dans lequel
le moyen de fixation (3) traverse le réservoir supplémentaire (6) et/ou l'élément formant bras oscillant (2).

4. Système à ressort pneumatique (1) selon l'une des revendications précédentes,
dans lequel
une zone d'interface sur la face supérieure (11) sur laquelle est monté le ressort pneumatique (5) et une zone d'interface sur la face inférieure (12) sur laquelle est monté le réservoir supplémentaire (6) se font face sur l'élément formant bras oscillant (2).

5. Système à ressort pneumatique (1) selon l'une des revendications précédentes,
dans lequel
dans l'état monté, le réservoir supplémentaire (6) et le ressort pneumatique (5) sont au moins partiellement superposés dans une direction qui s'étend perpendiculairement à la face supérieure (11) et/ou perpendiculairement à la face inférieure (12) de l'élément formant bras oscillant (2).

6. Système à ressort pneumatique (1) selon l'une des revendications précédentes,
dans lequel
le ressort pneumatique (5) et le réservoir supplémentaire (6) sont reliés l'un à l'autre pour un échange de gaz par un canal (14) traversant l'élément formant bras oscillant (2).

7. Système à ressort pneumatique (1) selon la revendication 6,
dans lequel
il est prévu une valve pour commander l'échange de gaz.

8. Système à ressort pneumatique (1) selon l'une des revendications précédentes,
dans lequel
le réservoir supplémentaire (6) et le ressort pneumatique (5) sont agencés dans une zone d'extrémité de l'élément formant bras oscillant (2), vue en direction longitudinale.

9. Système à ressort pneumatique (1) selon l'une des revendications précédentes,
dans lequel
l'élément formant bras oscillant (2) présente des parois latérales (14), le réservoir supplémentaire (6) pouvant être mis en place au moins partiellement, de préférence majoritairement par coopération de forme dans une zone creuse définie par la face inférieure (12) de l'élément formant bras oscillant (2) et par les parois latérales (14).

10. Système à ressort pneumatique (1) selon la revendication 9,
dans lequel
un logement (7) prévu pour monter l'essieu de véhicule constitue une délimitation pour la zone creuse, le réservoir supplémentaire (6) ayant sur un côté une forme adaptée à la délimitation définie par le logement (7).

11. Système à ressort pneumatique (1) selon l'une des revendications précédentes,
dans lequel
le réservoir supplémentaire (6) est réalisé de manière à faire saillie par rapport aux parois latérales (14), vues dans une direction qui s'étend perpendiculairement à la face inférieure (12) de l'élément formant bras oscillant (2).

12. Système à ressort pneumatique (1) selon l'une des revendications précédentes,
dans lequel
le réservoir supplémentaire (6) est monté sur l'élément formant bras oscillant (2) par des courroies fixées à l'élément formant bras oscillant (2).

13. Véhicule, en particulier véhicule utilitaire ou remorque pour un véhicule utilitaire, comportant un système à ressort pneumatique (1) selon l'une des revendications précédentes.

14. Procédé de montage d'un système à ressort pneumatique (1) selon l'une des revendications précédentes sur un véhicule, comprenant les étapes consistant à :
-- agencer un réservoir supplémentaire (6) sur une face inférieure d'un élément formant bras oscillant (2),
-- agencer un ressort pneumatique (5) sur une face supérieure (11) de l'élément formant bras oscillant (2), et
-- fixer le réservoir supplémentaire (6) sur la face inférieure (12) de l'élément formant bras oscillant (2) par un mécanisme de couplage détachable réversible et fixer le ressort pneumatique (5) sur la face supérieure de l'élément formant bras oscillant (2).
